# EUROPEAN PATENT SPECIFICATION

(11) **EP 0 535 281 B1**
(45) Date of publication and mention of the grant of the patent: **12.02.1997**
(21) Application number: 91310553.2
(22) Date of filing: 15.11.1991
(51) Int. Cl.: H02P 21/00

(54) **Apparatus for a universal field oriented controller for an induction machine**
Vorrichtung für ein "nach dem Feldorientierungsprinzip" arbeitendes, universelles Steuerungsgerät eines Induktionsmotors
Appareil pour un régulateur universel à orientation de champ d'une machine asynchrone

(30) Priority: 02.10.1991 US 769693
(43) Date of publication of application: 07.04.1993
(73) Proprietor: GENERAL ELECTRIC COMPANY, Schenectady, NY 12345 (US)
(72) Inventor: DeDoncker, Rik Wivina Anna Adelson, Schenectady, New York 12309 (US); Sanza, Peter Claudius, Clifton Park, New York 12065 (US); King, Robert Dean, Schenectady, New York 12306 (US); Haefner, Kenneth Browning, Schenectady, New York 12308 (US)
(74) Representative: Szary, Anne Catherine

(56) References cited:
- EP-A- 0 076 029
- US-A- 4 023 083
- US-A- 4 088 934
- US-A- 4 441 064
- US-A- 4 524 310
- US-A- 4 677 360
- IEEE INDUSTRY APPLICATIONS SOCIETY ANNUAL MEETING October 1990, SEATTLE, WASHINGTON pages 410 - 415 Y.XUE & AL. 'A low cost stator flux oriented voltage source variable speed drive' equations 7-12

## Description

This application is related to EP-A-0,535,280 (European Patent application 91310552.4 (Docket No. RD-21534) filed concurrently herewith.

### Field of the Invention

The present invention relates generally to field-oriented controllers. More particularly, the present invention relates to closed-loop torque feedback for a universal field-oriented controller for an induction machine.

### BACKGROUND OF THE INVENTION

EP-A-0,076,029 and US-A-4,023,083 describe arrangements for regulating the torque of an induction motor. In the first instance, the regulation is intended to give the induction motor an equivalent performance to d.c. motors while in the second case relates to a regulating system for torque control utilising two feedback loops.

In commonly assigned U.S. Patent No. 4,968,925 of Rik W.A.A. De Doncker, issued November 6, 1990, a universal field-oriented (UFO) controller is described which allows for field-oriented control of induction machines in an arbitrary flux reference frame. The principle of the UFO controller applies to both direct and indirect field orientation. In practice, this allows for the integration of six different field orientation schemes into a single control, i.e., direct and indirect field orientation in rotor flux, air gap flux and stator flux reference frames. In operation of the UFO controller, a synchronous reference frame is selected by setting the effective stator-to-rotor turns ratio to a predetermined value corresponding thereto. Transitions between reference frames are accomplished by changing the turns ratio. The result is complete decoupling of torque and flux in a flexible, simple and robust drive that is relatively insensitive to machine parameters.

EP-A-0535280, cited hereinabove, describes a high-speed flux feedback system for a UFO controller which quickly and accurately provides the amplitude and angle components of flux for use in a field-oriented control scheme. Flux feedback according to EP-A-0535280 results in tuned operation of an induction machine drive at the commanded flux and corresponding slip frequency unless errors are introduced by, for example, the current regulator and/or inverter. Such errors may cause the torque produced by the motor to differ from the commanded torque. Therefore, it is desirable to provide a torque feedback loop for a UFO controller in order to maintain robust torque control over a wide speed range.

### Summary of the Invention

According to the present invention, there is provided apparatus for a universal field-oriented controller for an induction motor comprising: flux sensing means for sensing the direct and quadrature components respectively, of flux in a stationary reference frame linked to a predetermined phase of the induction motor; current sensing means for sensing the respective stator phase currents in at least two phases of the induction predetermined phase of the induction motor; torque-calculating means for calculating torque from the sensed components of the flux and the sensed stator phase currents; comparator means for comparing the torque from the torque-calculating means to a torque command and generating a difference signal therefrom; characterized by a first torque feedback loop comprising a first proportional-integral compensator followed by a first summer receiving the current command for receiving the difference signal and tuning a torque producing current command in accordance therewith; and a second torque feedback loop comprising a second proportional-integral compensator followed by a second summer receiving the slip-frequency command for receiving the difference signal and tuning a slip frequency command in accordance therewith, both of the tuned circuit command signals being generated without rotor flux calculations and being independent of the parameters of the motor.

In accordance with an embodiment of the invention, a torque feedback system is employed in a UFO controller for an induction machine to tune a torque-producing current command and a slip frequency command. The direct (d) and quadrature (q) components of flux Ψ$\frac{\text{s}}{\text{d}}$ and Ψ$\frac{\text{s}}{\text{q}}$, respectively, are sensed by flux sensors; and stator phase currents are sensed by current sensors to provide the dq components of current i$\frac{\text{s}}{\text{sd}}$ and i$\frac{\text{s}}{\text{sq}}$, respectively. Torque is calculated from the sensed flux and current quantities according to the expression:${\text{T}}_{\text{em}} \text{=} \frac{\text{3}}{\text{2}} {\text{p (i}}_{\text{sq}}^{\text{s}} {\text{Ψ}}_{\text{d}}^{\text{s}} {\text{- i}}_{\text{sd}}^{\text{s}} {\text{Ψ}}_{\text{q}}^{\text{s}} \text{),}$ where p represents the stator pole pair number. The value of torque Tₑₘ is compared with a torque command, and the resulting corrected torque command is used to tune the current command and the slip frequency command.

### Brief Description of the Drawings

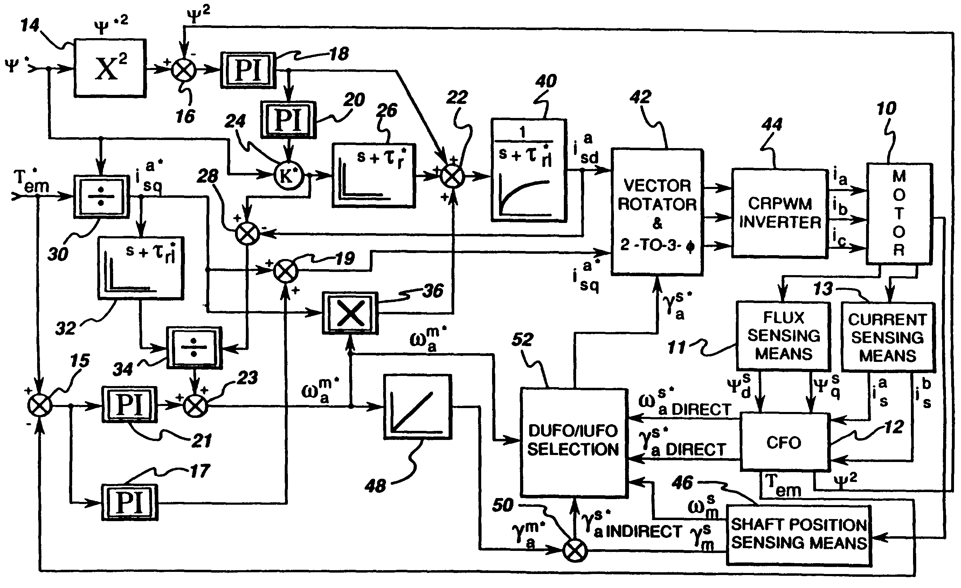

The invention will now be described in greater detail, by way of example, with reference to the drawing, the single figure of which illustrates a UFO controller employing torque feedback in accordance with a preferred embodiment of the present invention.

### Detailed Description of the Invention

The drawing FIGURE illustrates a UFO controller of the type described in De Doncker U.S. Patent No. 4,968,925, cited hereinabove, with the addition of flux feedback, as described in EP-A-0,535,280, cited hereinabove, and further employing torque feedback in accordance with the present invention. As described in U.S. Patent No. 4,968,925, the induction machine equations expressed in an arbitrary synchronous reference frame i linked to an arbitrary flux vector are as follows:${\text{v}}_{̲} {\text{}}_{\text{s}}^{\text{i}} {\text{= R}}_{\text{s}} {\text{i}}_{̲} {\text{}}_{\text{s}}^{\text{i}} \text{+} \frac{\text{d} {\text{Ψ}}_{̲} {\text{}}_{\text{s}}^{\text{i}}}{\text{dt}} \text{+ j} \frac{{\text{dγ}}_{\text{i}}^{\text{s}}}{\text{dt}} {\text{Ψ}}_{̲} {\text{}}_{\text{s}}^{\text{i}}$${\text{0 = R}}_{\text{r}} {\text{i}}_{̲} {\text{}}_{\text{r}}^{\text{i}} \text{+} \frac{\text{d} {\text{Ψ}}_{̲} {\text{}}_{\text{r}}^{\text{i}}}{\text{dt}} \text{+ j} \frac{{\text{dγ}}_{\text{i}}^{\text{m}}}{\text{dt}} {\text{Ψ}}_{̲} {\text{}}_{\text{r}}^{\text{i}}$${\text{Ψ}}_{̲} {\text{}}_{\text{s}}^{\text{i}} {\text{= L}}_{\text{s}} {\text{i}}_{̲} {\text{}}_{\text{s}}^{\text{i}} {\text{+ L}}_{\text{s}} {\text{i}}_{̲} {\text{}}_{\text{r}}^{\text{i}} {\text{= L}}_{\text{sl}} {\text{i}}_{̲} {\text{}}_{\text{s}}^{\text{i}} \text{+} {\text{Ψ}}_{̲} {\text{}}_{\text{h}}^{\text{i}}$${\text{Ψ}}_{̲} {\text{}}_{\text{r}}^{\text{i}} {\text{= L}}_{\text{h}} {\text{i}}_{̲} {\text{}}_{\text{s}}^{\text{i}} {\text{+ L}}_{\text{rl}} {\text{i}}_{̲} {\text{}}_{\text{r}}^{\text{i}} {\text{= L}}_{\text{rl}} {\text{i}}_{̲} {\text{}}_{\text{r}}^{\text{i}} \text{+} {\text{Ψ}}_{̲} {\text{}}_{\text{h}}^{\text{i}}$${\text{T}}_{\text{em}} \text{=} \frac{\text{3}}{\text{2}} \text{p Im (} {\text{i}}_{̲} {\text{}}_{\text{s}}^{\text{i}} \text{•} {\text{Ψ}}_{̲} {\text{}}_{\text{s}}^{\text{i*}} \text{)}$$\text{J} \frac{{\text{d}}^{\text{2}} {\text{γ}}_{\text{m}}^{\text{s}}}{{\text{dt}}^{\text{2}}} {\text{= T}}_{\text{em}} {\text{- T}}_{\text{load}}$${\text{γ}}_{\text{m}}^{\text{s}} {\text{+ γ}}_{\text{i}}^{\text{m}} {\text{= γ}}_{\text{i}}^{\text{s}}$ with:${\text{L}}_{\text{s}} {\text{= L}}_{\text{h}} {\text{+ L}}_{\text{sl}}$${\text{L}}_{\text{r}} {\text{= L}}_{\text{h}} {\text{+ L}}_{\text{rl}}$ where:
v$\frac{\text{i}}{\text{s}}$ = instantaneous stator voltage
Rₛ = stator resistance
Rᵣ = rotor resistance
Lₕ = main inductance
Lₛₗ = stator leakage inductance
Lᵣₗ = rotor leakage inductance
Lₛ = stator inductance
Lᵣ = rotor inductance
Tₑₘ = electromagnetic torque
p = pole pair number
T_{load} = load torque
J = system inertia
γ$\frac{\text{s}}{\text{m}}$ = angular position of rotor shaft with respect to a fixed stator reference frame
γ$\frac{\text{s}}{\text{i}}$ = angle from a fixed stator reference to arbitrary reference frame i
γ$\frac{\text{m}}{\text{i}}$ = angle from the rotor shaft to arbitrary reference frame i; and the system variables, including flux linkage Ψ and current i, are written according to the following convention:${\text{x}}_{̲} {\text{}}_{\text{j}}^{\text{i}} {\text{= x}}_{\text{jd}}^{\text{i}} {\text{+ jx}}_{\text{jq}}^{\text{i}} {\text{= x}}_{\text{jd}}^{\text{i}} \text{+} \sqrt{\text{-1}} {\text{x}}_{\text{jq}}^{\text{i}}$ with:
- j = r :: rotor quantities
- j = s :: stator quantities
- j = h :: air gap quantities
- j = m :: mechanical rotor quantity (position)
- i = r :: rotor flux synchronous reference frame
- i = s :: stationary reference frame linked to phase a of the stator windings
- i = t :: stator flux synchronous reference frame
- i = h :: air gap flux reference frame
- i = m :: rotating reference frame linked to the rotor shaft
- i = i :: arbitrary synchronous reference frame
- i = a :: synchronous reference frame linked to arbitrary flux vector.
According to U.S. Patent No. 4,968,925, the arbitrary reference frame i is linked to an arbitrary flux vector which can be derived from flux linkage equations (3) and (4) above by means of a stator-to-rotor effective turns ratio (a) transformation.

As shown in the drawing FIGURE, the UFO controller of the present invention includes a first torque feedback loop for regulating the torque-producing current command i$\frac{\text{a*}}{\text{sq}}$. A second torque feedback loop is provided to regulate the slip frequency ω$\frac{\text{m*}}{\text{a}}$. In this way, robust torque control is maintained over a wide speed range and during transitions between modes of operation such as, for example, transitions between a current-controlled PWM mode and a six-stepped square wave mode at the corner point speed of the motor. Moreover, the torque feedback loop maintains robust control during both direct (DUFO) and indirect (IUFO) field-orientation modes.

As shown in the drawing FIGURE, for operation of the UFO controller in a direct field orientation (DUFO) mode, measurements of the direct (d) and quadrature (q) components of flux, Ψ$\frac{\text{s}}{\text{d}}$ and , Ψ$\frac{\text{s}}{\text{q}}$, respectively, are taken from the respective stator phases of an induction motor 10 by a flux sensing means 11; and phase current measurements i$\frac{\text{a}}{\text{s}}$ and i$\frac{\text{b}}{\text{s}}$ are taken by a current sensing means 13. (By way of example, current measurements are shown as being taken from two phases only of a three-phase machine, e.g., phases *a* and *b*; however, phase current measurements could be taken from all three phases, if desired.) The sensed flux and current quantities are provided to a calculator for field orientation (CFO) 12. CFO 12 quickly and accurately determines the amplitude and angle components of flux from the flux measurements and provides flux amplitude squared feedback Ψ² (or, alternatively, linear flux feedback Ψ) in accordance with EP-A-0 535 280. Furthermore, in accordance with the present invention, CFO 12 quickly and accurately determines the induction motor torque Tₑₘ for use as feedback for tuning the torque-producing current command i$\frac{\text{a*}}{\text{sq}}$ and the slip frequency command ω$\frac{\text{m*}}{\text{a}}$.

Flux sensing means 11 may comprise Hall effect sensors or flux coils to measure flux directly. Alternatively, flux sensing means 11 may calculate flux from measurements of stator voltages and currents in a well-known manner according to:${\text{Ψ = ∫(V}}_{\text{s}} {\text{- I}}_{\text{s}} {\text{R}}_{\text{s}} \text{) dt,}$ where Rₛ is the resistance of the respective stator phase winding, Vₛ is the stator voltage, and Iₛ is the respective stator phase current.

Current sensing means 13 may comprise any suitable current sensors, such as, for example, Hall effect current sensors, current sensing transformers or current sensing resistors.

In accordance with the present invention, torque Tₑₘ is determined by CFO 12 using the sensed flux and current quantities according to the expression:${\text{T}}_{\text{em}} \text{=} \frac{\text{3}}{\text{2}} {\text{p (i}}_{\text{sq}}^{\text{s}} {\text{Ψ}}_{\text{d}}^{\text{s}} {\text{- i}}_{\text{sd}}^{\text{s}} {\text{Ψ}}_{\text{q}}^{\text{s}} \text{).}$ For example, if phase *a* is chosen as the reference phase, then the d component of current i$\frac{\text{s}}{\text{sd}}$ is equal to the sensed phase *a* current; and the q component of current i$\frac{\text{s}}{\text{sq}}$ is determined by the expression:${\text{i}}_{\text{sq}}^{\text{s}} \text{=} \frac{\sqrt{\text{3}}}{\text{3}} {\text{(i}}_{\text{s}}^{\text{a}} {\text{+ 2i}}_{\text{s}}^{\text{b}} \text{)} \text{.}$

As shown in the drawing FIGURE, the torque Tₑₘ is compared in a summer 15 to the torque command T$\frac{\text{*}}{\text{em}}$, and the resultant difference signal takes two paths. In a first of the two paths, the difference signal from summer 15 is applied to a first proportional-integral (PI) compensator 17. The output signal from the first PI compensator 17 is added in a first summer 19 to the current command i$\frac{\text{a*}}{\text{sq}}$, which is derived from the torque command T$\frac{\text{*}}{\text{em}}$ by a dividing block 30. The torque-producing current command i$\frac{\text{a*}}{\text{sq}}$ is thereby tuned for robust control in any mode of operation.

In the second torque feedback path, the difference signal from summer 15 is applied to a second PI compensator 21. The output signal from the second PI compensator 21 is added in a second summer 23 to a slip frequency command ω$\frac{\text{m*}}{\text{a}}$, which is derived from the current command i$\frac{\text{a*}}{\text{sq}}$ via blocks 32 and 34, as described hereinbelow. The slip frequency command ω$\frac{\text{m*}}{\text{a}}$ is thereby tuned for robust control in any mode of operation.

The remaining elements of the UFO controller shown in the drawing FIGURE are described in patent application EP-A-0 535 280 (Docket: RD-21534). In particular, a flux command Ψ$\frac{\text{*}}{\text{s}}$ is squared in a multiplier 14 and then compared by a summer 16 with the flux amplitude squared feedback Ψ² from CFO 12. The resultant error signal is applied to a proportional-integral (PI) compensator 18, the output signal of which is applied to another PI compensator 20 and, via an alternate path, to a summer 22. The output of PI compensator 20 is added to the open loop gain K* of a multiplier 24. In particular, PI compensator 20 is set to provide a slow gain change to adapt K* to tune the UFO controller. An expression for the open loop gain is given as follows:$\text{K* =} \frac{\text{1}}{{\text{a*L}}_{\text{h}}^{\text{*}} {\text{σ}}_{\text{a}}^{\text{*}}} \text{,}$ where$\text{σ =} \frac{{\text{a*L}}_{\text{r}}^{\text{*}} {\text{- L}}_{\text{h}}^{\text{*}}}{{\text{a*L}}_{\text{r}}^{\text{*}}} \text{,}$ The resulting signal K*Ψ$\frac{\text{*}}{\text{s}}$ is applied to a circuit 26 having the transfer function${\text{s + τ}}_{\text{r}}^{\text{*}} \text{,}$ where${\text{τ}}_{\text{r}}^{\text{*}} \text{=} \frac{{\text{R}}_{\text{r}}^{\text{*}}}{{\text{L}}_{\text{r}}^{\text{*}}} \text{=} \frac{\text{1}}{{\text{T}}_{\text{r}}^{\text{*}}} \text{.}$

The signal K*Ψ$\frac{\text{*}}{\text{s}}$ is also applied, via an alternate path, to a summer 28 wherein it is combined with the direct component of stator current i$\frac{\text{a}}{\text{sd}}$ according to the UFO decoupling equations set forth in De Doncker U.S. Pat. No. 4,968,925, cited hereinabove. The stator current command i$\frac{\text{a*}}{\text{sq}}$, derived from torque command T$\frac{\text{*}}{\text{em}}$ via dividing block 30, is applied to circuit 32 having the transfer function${\text{s + τ}}_{\text{rl}}^{\text{*}} \text{,}$ where${\text{τ}}_{\text{rl}}^{\text{*}} \text{=} \frac{{\text{R}}_{\text{r}}^{\text{*}}}{{\text{σ}}_{\text{a}}^{\text{*}} {\text{L}}_{\text{r}}^{\text{*}}} \text{=} \frac{\text{1}}{{\text{T}}_{\text{r}}^{\text{*}}} \text{.}$ The resulting signal is divided in a divider 34 by the output signal of summer 28 to produce a rotor slip frequency command ω$\frac{\text{m*}}{\text{a}}$. Stator current command i$\frac{\text{a*}}{\text{sq}}$ is also applied to a multiplier 36 wherein it is multiplied by rotor slip frequency command ω$\frac{\text{m*}}{\text{a}}$. The output signal of multiplier 36 is added in summer 22 to the aforementioned output signal of circuit 26 and to the output signal from PI compensator 18. PI compensator 18 is set to provide fast flux feedback so that when the open loop gain K* is tuned by slow PI compensator 20, then the output signal from PI compensator 18 is nulled. The output signal from summer 22 is applied to a circuit 40 having the transfer function$\frac{\text{1}}{{\text{s + τ}}_{\text{rl}}^{\text{*}}} \text{,}$ which provides the direct component of stator current i$\frac{\text{a}}{\text{sd}}$.

The direct component of stator current i$\frac{\text{a}}{\text{sd}}$ from circuit 40 and the q-component current command i$\frac{\text{a*}}{\text{sd}}$ are provided to a vector rotator and two-to-three-phase transformation block 42 which transforms the dq coordinates of the stator current vector from an arbitrary synchronous reference frame (linked to an arbitrary flux vector) to a stationary three-phase reference frame, as described in U.S. Pat. No. 4,968,925, cited hereinabove. In particular, in the UFO control scheme illustrated in the drawing FIGURE, the output signals from vector rotator block 42 comprise three-phase drive signals for energizing the three phases of a current-regulated pulse-width modulated (CRPWM) inverter 44 to drive the three phases of induction motor 10 in well-known fashion.

For operation of the UFO controller of the drawing FIGURE in an indirect field-orientation mode (IUFO) mode, shaft position sensing means 46 is used to measure rotor position angle γ$\frac{\text{s}}{\text{m}}$ and further to provide a frequency measurement ω$\frac{\text{s}}{\text{m}}$. An integrator 48 is provided to integrate the rotor slip frequency command ω$\frac{\text{m*}}{\text{a}}$, yielding a rotor slip angle command γ$\frac{\text{m*}}{\text{a}}$. The rotor slip angle command γ$\frac{\text{m*}}{\text{a}}$ is added in a summer 50 to the rotor position signal γ$\frac{\text{s}}{\text{m}}$ from shaft position sensing means 46 to produce a signal representative of the angle γ$\frac{\text{s*}}{\text{a}}$.

The angle γ$\frac{\text{s*}}{\text{a}}$ from summer 50, the slip frequency command ω$\frac{\text{s*}}{\text{a}}$ from dividing block 34, the output signals γ$\frac{\text{s*}}{\text{a}}$ and ω$\frac{\text{s*}}{\text{a}}$ from CFO 12, and the frequency signal ω$\frac{\text{s}}{\text{m}}$ from shaft position sensing means 46 are applied to a DUFO/IUFO selection and transition block 52 for selecting operation in and enabling transitions between DUFO and IUFO modes.

Advantageously, the torque feedback system of the present invention compensates for current regulator errors and others errors, such as those introduced by inverter delays. For example, when an induction motor drive is operating in a PWM mode and transitions to a six-stepped square wave mode, the current regulator saturates. At that instant, the torque and flux feedback control of current may saturate, but the torque feedback control of slip frequency takes over and maintains proper control of torque.

While the preferred embodiments of the present invention have been shown and described herein, it will be obvious that such embodiments are provided by way of example only.

## Claims

1. Apparatus for a universal field-oriented controller for an induction motor comprising:
flux sensing means (11) for sensing the direct and quadrature components (Ψ_{d} and Ψ_{q}) respectively, of flux in a stationary reference frame linked to a predetermined phase of the induction motor;
current sensing means (13) for sensing the respective stator phase currents (iₛ,iₛ) in at least two phases of the induction predetermined phase of the induction motor ;
torque-calculating means (12) for calculating torque (Tₑₘ) from the sensed components of the flux and the sensed stator phase currents;
comparator means (15) for comparing the torque from the torque-calculating means to a torque command (T*ₑₘ) and generating a difference signal therefrom;
characterized by
a first torque feedback loop comprising a first proportional-integral compensator (17) followed by a first summer (19) receiving the current command for receiving the difference signal and tuning a torque producing current command (i$\frac{\text{a*}}{\text{sq}}$) in accordance therewith; and
a second torque feedback loop comprising a second proportional-integral compensator (21) followed by a second summer (23) receiving the slip-frequency command for receiving the difference signal and tuning a slip frequency command (ω$\frac{\text{m*}}{\text{a}}$) in accordance therewith, both of the tuned circuit command signals being generated without rotor flux calculations and being independent of the parameters of the motor.

2. The apparatus of claim 1 wherein the induction motor has three stator phases and current is sensed by said current sensing means in two of said stator phases, the torque being calculated by said torque-calculating means according to the expression:${\text{T}}_{\text{em}} \text{=} \frac{\text{3}}{\text{2}} {\text{p (i}}_{\text{sq}}^{\text{s}} {\text{Ψ}}_{\text{d}}^{\text{s}} {\text{- i}}_{\text{sd}}^{\text{s}} {\text{Ψ}}_{\text{q}}^{\text{s}} \text{),}$ wherein p represents the number of pole pairs of the induction motor and wherein one of the two sensed phases is chosen as the reference phase so that the d component of current i$\frac{\text{s}}{\text{sd}}$ is equal to the phase current i$\frac{\text{a}}{\text{s}}$ sensed on said one of said phases, and the q component of current i$\frac{\text{s}}{\text{sq}}$ is determined according to the expression:${\text{i}}_{\text{sq}}^{\text{s}} \text{=} \frac{\sqrt{\text{3}}}{\text{3}} {\text{(i}}_{\text{s}}^{\text{a}} {\text{+ 2i}}_{\text{s}}^{\text{b}} \text{).}$ wherein the phase current sensed on the second one of the sensed phases is represented by i$\frac{\text{b}}{\text{s}}$.

3. The apparatus of claim 1 wherein the said flux sensing means comprises flux coils.

4. The apparatus of claim 1 wherein said flux sensing means comprises:
voltage sensing means for sensing the stator voltage Vₛ across the respective stator phase winding; and
flux estimating means for providing an estimate of the flux Ψ according to:${\text{Ψ = ∫(V}}_{\text{s}} {\text{- I}}_{\text{s}} {\text{R}}_{\text{s}} \text{) dt,}$ where Rₛ is the resistance of the respective stator phase winding, and Iₛ is the respective stator phase current.

## Patentansprüche

1. Einrichtung für einen universalen Feld-orientierten Regler für einen Induktionsmotor, enthaltend:
eine Flußabtast-Einrichtung (11) zum Abtasten der Längs- bzw. Querkomponenten (ψ_{d} und ψ_{q}) des Flusses in einem stationären Referenzrahmen, der mit einer vorbestimmten Phase des Induktionsmotors verbunden ist;
eine Stromabtast-Einrichtung (13) zum Abtasten der entsprechenden Statorphasenströme (iₛ,iₛ) in wenigstens zwei Phasen der durch Induktion vorbestimmten Phase des Induktionsmotors;
eine Drehmoment-Berechnungseinrichtung (12) zum Berechnen von Drehmoment (Tₑₘ) aus den abgetasteten Flußmomenten und den abgetasteten Statorphasenströmen;
eine Vergleicher-Einrichtung (15) zum Vergleichen des Drehmomentes von der Drehmoment-Berechnungseinrichtung mit einem Drehmoment-Sollwert (T$\frac{\text{*}}{\text{em}}$) und zum Erzeugen eines Differenzsignals daraus;
gekennzeichnet durch
eine erste Drehmoment-Rückführungsschleife, die einen ersten Proportional-Integral-Kompensator (17) aufweist, dem eine erste Summierstelle (19) folgt, die den Strom-Sollwert empfängt, zum Empfangen des Differenzsignals und zum Abstimmen eines drehmomenterzeugenden Strom-Sollwertes (i$\frac{\text{a*}}{\text{sq}}$) in Übereinstimmung damit; und
eine zweite Drehmoment-Rückführungsschleife, die einen zweiten Proportional-Integral-Kompensator (21) aufweist, dem eine zweite Summierstelle (23) folgt, die den Schlupffrequenz-Sollwert empfängt, zum Empfangen des Differenzsignals und zum Abstimmen eines Schlupffrequenz-Sollwertes (ω$\frac{\text{m*}}{\text{a}}$) in Übereinstimmung damit, wobei beide abgestimmten Sollwertsignale ohne Rotorflußberechnungen erzeugt werden und unabhängig von den Parametern des Motors sind.

2. Einrichtung nach Anspruch 1, wobei der Induktionsmotor drei Statorphasen hat und Strom durch die Stromabtasteinrichtung in zwei Statorphasen abgetastet wird, wobei das Drehmoment durch die Drehmoment-Berechnungseinrichtung berechnet wird gemäß dem Ausdruck:${\text{T}}_{\text{em}} \text{=} \frac{\text{3}}{\text{2}} {\text{p (i}}_{\text{sq}}^{\text{s}} {\text{Ψ}}_{\text{d}}^{\text{s}} {\text{- i}}_{\text{sd}}^{\text{s}} {\text{Ψ}}_{\text{q}}^{\text{s}} \text{),}$ wobei p die Polpaarzahl des Induktionsmotors darstellt und wobei eine der zwei abgetasteten Phasen als die Referenzphase gewählt wird, so daß die d-Komponente des Stroms i$\frac{\text{s}}{\text{sd}}$ gleich dem Phasenstrom i$\frac{\text{a}}{\text{s}}$ ist, der in der einen der Phasen abgetastet wird, und die q-Komponente des Stroms i$\frac{\text{s}}{\text{sq}}$ ermittelt wird gemäß dem Ausdruck:${\text{i}}_{\text{sq}}^{\text{s}} \text{=} \frac{\sqrt{\text{3}}}{\text{3}} {\text{(i}}_{\text{s}}^{\text{a}} {\text{+ 2i}}_{\text{s}}^{\text{b}} \text{).}$ wobei der Phasenstrom, der in der zweiten der abgetasteten Phasen abgetastet wird, durch i$\frac{\text{b}}{\text{s}}$ dargestellt wird.

3. Einrichtung nach Anspruch 1, wobei die Flußabtast-Einrichtung Flußspulen aufweist.

4. Einrichtung nach Anspruch 1, wobei die Flußabtast-Einrichtung enthält:
eine Spannungsabtast-Einrichtung zum Abtasten der Statorspannung Vₛ über der entsprechenden Statorphasenwicklung; und
eine Flußabschätz-Einrichtung zum Liefern einer Schätzung des Flusses ψ gemäß:${\text{ψ = ∫(V}}_{\text{s}} {\text{- I}}_{\text{s}} {\text{R}}_{\text{s}} \text{) dt,}$ wobei Rₛ der Widerstand der entsprechenden Statorphasenwicklung und Iₛ der entsprechende Statorphasenstrom ist.

## Revendications

1. Dispositif pour un régulateur universel à orientation de champ destiné à un moteur à induction, comprenant :
- un moyen (11) de détection du flux servant à détecter respectivement les composantes directe et en quadrature (Ψ_{d} et Ψ_{q}) du flux dans un repère de référence fixe lié à une phase prédéterminée du moteur à induction,
- un moyen (13) de détection du courant servant à détecter les courants de phase respectifs (is, is) du stator dans au moins deux phases de la phase prédéterminée d'induction du moteur à induction,
- un moyen (12) de calcul de couple servant à calculer un couple (Tₑₘ) à partir des composantes détectées du flux et des courants de phase détectés du stator,
- un moyen comparateur (15) servant à comparer le couple provenant du moyen de calcul de couple à une instruction de couple (T*ₑₘ) et à produire à partir de là un signal de différence, caractérisé par :
- une première boucle d'asservissement du couple comprenant un premier compensateur (17) à action proportionnelle et intégrale suivi d'un premier sommateur (19) recevant l'instruction de courant pour recevoir le signal de différence et accorder sur celui-ci une instruction (i^{e∗}_{sq}) de courant de production de couple, et
- une deuxième boucle d'asservissement du couple comprenant un deuxième compensateur (21) à action proportionnelle et intégrale suivi d'un deuxième sommateur (23) recevant l'instruction de fréquence de glissement pour recevoir le signal de différence et accorder sur celui-ci une instruction (ω^{m*}ₐ) de fréquence de glissement, les deux signaux d'instruction accordés du circuit étant produits sans calcul du flux du rotor et étant indépendants des paramètres du moteur.

2. Dispositif selon la revendication 1, dans lequel le moteur à induction a trois phases de stator et un courant est détecté par ledit moyen de détection du courant dans deux desdites phases du stator, le couple étant calculé par ledit moyen de calcul du couple d'après l'expression :${\text{T}}_{\text{em}} {\text{= 3/2 p (i}}^{\text{s}} {}_{\text{sq}} {\text{Ψ}}^{\text{s}} {}_{\text{d}} {\text{- i}}^{\text{s}} {}_{\text{sd}} {\text{Ψ}}^{\text{s}} {}_{\text{q}} \text{)}$ dans laquelle p représente le nombre de paires de pôles du moteur à induction et dans laquelle l'une des deux phases détectées est choisie comme la phase de référence de telle sorte que la composante d du courant i^{s}_{sd} est égale au courant de phase i^{a}ₛ détecté sur ladite première des phases et la composante q du courant i^{s}_{sq} est déterminée d'après l'expression :${\text{i}}^{\text{s}} {}_{\text{sq}} {\text{= √3/3 (i}}^{\text{a}} {}_{\text{s}} {\text{+ 2i}}^{\text{b}} {}_{\text{s}} \text{)}$ dans laquelle le courant de phase détecté sur la deuxième des phases détectées est représenté par i^{b}ₛ.

3. Dispositif selon la revendication 1, dans lequel ledit moyen de détection du flux comprend des bobines de flux.

4. Dispositif selon la revendication 1, dans lequel ledit moyen de détection du flux comprend :
- un moyen de détection de la tension servant à détecter la tension du stator Vs aux bornes de l'enroulement de phase de stator correspondant, et
- un moyen d'estimation du flux servant à fournir une estimation du flux Ψ d'après l'expression :$\text{Ψ = ∫(Vs - IsRs) dt}$ dans laquelle Rs est la résistance de l'enroulement de phase de stator correspondant et Is est le courant de phase de stator correspondant.
